(19) Europäisches Patentamt / European Patent Office / Office européen des brevets

(11) **EP 3 129 562 B1**

(12) **FASCICULE DE BREVET EUROPEEN**

(45) Date de publication et mention de la délivrance du brevet:
**19.08.2020 Bulletin 2020/34**

(21) Numéro de dépôt: **15718973.9**

(22) Date de dépôt: **30.03.2015**

(51) Int Cl.:
*E04B 1/80* (2006.01)     *E04B 7/00* (2006.01)
*E04F 13/00* (2006.01)     *F28D 20/02* (2006.01)
*E04C 2/02* (2006.01)      *C08J 9/00* (2006.01)
*E04B 7/22* (2006.01)      *F28D 20/00* (2006.01)

(86) Numéro de dépôt international:
**PCT/FR2015/050811**

(87) Numéro de publication internationale:
**WO 2015/155438 (15.10.2015 Gazette 2015/41)**

(54) **ENSEMBLE D'ISOLATION THERMIQUE INCLUANT DES PANNEAUX PIV ET PROCÉDÉ D'ASSEMBLAGE D'UN TEL ENSEMBLE**

WÄRMEDÄMMUNGSANORDNUNG MIT PIV-PLATTEN UND VERFAHREN ZUR MONTAGE EINER DERARTIGEN ANORDNUNG

THERMAL INSULATION ASSEMBLY INCLUDING PIV PANELS AND METHOD OF ASSEMBLING SUCH AN ASSEMBLY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.04.2014 FR 1453194**

(43) Date de publication de la demande:
**15.02.2017 Bulletin 2017/07**

(73) Titulaire: **Electricité de France**
**75008 Paris (FR)**

(72) Inventeurs:
• **DUFORESTEL, Thierry**
**77250 Moret sur Loing (FR)**
• **MILLEVILLE, Pierre-Henri**
**77670 Vernou la Celle (FR)**
• **BERNARD, Jean-David**
**77190 Dammarie les Lys (FR)**
• **BOUIA, Hassan**
**77250 Moret sur Loing (FR)**

(74) Mandataire: **Plasseraud IP**
**66, rue de la Chaussée d'Antin**
**75440 Paris Cedex 09 (FR)**

(56) Documents cités:
EP-A1- 2 540 925          WO-A1-2013/088075
DE-U1-202011 101 624

• **DATABASE WPI Week 201002 Thomson Scientific, London, GB; AN 2009-S61845 XP002733157, -& JP 2009 299764 A (HITACHI KUCHO SYSTEM KK) 24 décembre 2009 (2009-12-24)**

**Description**

La présente invention concerne, notamment dans le domaine du bâtiment, les installations d'isolation thermique qui incorporent une couche isolante formée de panneaux élémentaires de type PIV (Panneau Isolant sous Vide) et au moins une ossature de support typiquement rigide, situé du côté du parement. L'invention concerne plus particulièrement un ensemble d'isolation thermique et un procédé de fabrication d'un tel ensemble d'isolation thermique.

Les panneaux élémentaires de type PIV comprennent de façon connue en soi un matériau de cœur poreux isolant (par exemple à structure micro-cellulaire ou nano-cellulaire à cellules ouvertes) maintenu sous vide par une enveloppe barrière garantissant l'étanchéité aux gaz. L'enveloppe barrière est souple et intègre généralement un film thermo-soudable. Ces panneaux forment des plaques d'épaisseur sensiblement constante et présentent de grandes tailles, par exemple 600 mm de largeur et 1200 mm de longueur (d'autres largeur, par exemple de 300 mm, 400, 500 jusqu'à 1200 mm étant bien entendu disponibles, la longueur variant généralement entre 500 et 2500 mm). La taille de ces panneaux conviendrait donc pour le recouvrement de parois de bâtiments à des fins d'isolation thermique. De plus, la performance thermique de ces panneaux élémentaires conduit à des épaisseurs qui peuvent être réduites pour minimiser l'encombrement du système d'isolation thermique, l'épaisseur d'un panneau pouvant être inférieure à 60 mm, et de préférence inférieure à 35 mm.

Dans le domaine, on qualifie de super isolants thermiques des matériaux présentant, à température ambiante, un niveau de conductivité thermique inférieure à 0,025 W m$^{-1}$ K$^{-1}$. Les panneaux PIV ont une conductivité thermique inférieure à 0,007 W m$^{-1}$ K$^{-1}$, et plus préférentiellement inférieure à 0,005 W m$^{-1}$ K$^{-1}$.

Dans les panneaux élémentaires de type PIV, tous les gaz présents sont évacués du matériau poreux super isolant avant un conditionnement sous vide au sein d'une enveloppe barrière souple généralement constitué (de façon connue en soi) d'un film thermo-soudable pouvant être métallisé qui permet en outre d'éviter la formation de ponts thermiques au niveau des tranches. JP 2009299764 et EP 2 540 925 montrent des assemblages incluant de tels panneaux de type PIV.

L'utilisation de tels panneaux élémentaires pour réaliser une installation d'isolation thermique présente cependant les inconvénients suivants :

- d'une part, l'enveloppe barrière très mince est fragile vis-à-vis de risques de perforations au contact de surfaces rigides ou à angles vifs et fragile également vis-à-vis de la chaleur,
- d'autre part, si le panneau sous vide réalisé avec cette enveloppe présente une bonne rigidité apparente, il ne tolère pas d'efforts de compression ou de flexion qui sont susceptibles d'allonger localement l'enveloppe et de dégrader ses propriétés de barrière aux gaz.

On connaît, par exemple par le document DE 102008019717, un élément composite d'isolation, consistant en une combinaison d'un panneau PIV et une couche constituée d'un matériau de stockage de chaleur latente (par exemple sous une forme encapsulée). Le panneau PIV et la couche sous-jacente sont insérés entre une paire de plaques de métal, de plastique, de verre ou de céramique. Des écarteurs qui forment deux tranches latérales de l'élément composite permettent de maintenir une séparation constante entre les plaques. Une telle disposition permet de protéger mécaniquement le panneau PIV et le matériau de stockage de chaleur latente. Un tel élément composite permet de limiter la montée en température (par exemple en été) du côté interne où se situe l'espace à isoler, du fait de la capacité thermique massique élevée du matériau de stockage de chaleur latente.

Ce type d'élément composite peut présenter une certaine finesse en utilisant une couche à base de matériau de stockage de chaleur latente qui est à peine plus épaisse ou aussi épaisse que le panneau PIV. Cependant, un élément composite conçu en usine présente des applications limitées, notamment en raison du coût individuel de chaque élément composite et de la moindre efficacité de l'isolation thermique globale liée à la présence des écarteurs (ponts thermiques même si ces écarteurs sont réalisés en matériau rigide poreux).

De plus, un élément composite d'isolation tel que décrit dans le document DE 102008019717 n'assure pas de protection thermique efficace du panneau PIV. Or il a été constaté que les panneaux isolants sous vide (PIV) ne peuvent travailler qu'à des températures modérées. En pratique, au-delà de 40 ou 45°C, l'enveloppe barrière qui assure leur étanchéité se dégrade irréversiblement. Le processus de thermo-activation qui explique cette dégradation n'est pas clairement identifié, mais on constate expérimentalement que toutes les enveloppes utilisées pour étancher les panneaux PIV ont une perméance à l'air et à la vapeur d'eau qui augmente très significativement et de façon non réversible lorsqu'ils sont soumis, même sur une durée limitée, à des températures supérieures à un seuil de l'ordre de 40 à 45°C.

Il existe donc de manière générale un besoin pour utiliser des panneaux de type PIV dans une plus grande variété d'applications, y compris des applications avec de fortes sollicitations en température (notamment isolation thermique par l'extérieur, toitures terrasses, combles aménagés), tout en obtenant des performances d'isolation thermique élevées.

La présente invention a notamment pour but de pallier tout ou partie des inconvénients précités.

A cet effet, il est proposé selon l'invention un ensemble d'isolation thermique destiné à former ou recouvrir, notamment par l'extérieur, une paroi d'un bâtiment, comprenant :

- une pluralité de panneaux isolants ayant chacun une forme de plaque avec deux tranches parallèles opposées, chacun des panneaux comprenant un matériau poreux résistant à la compression et une enveloppe barrière étanche aux gaz, fermée sous vide, qui renferme le matériau poreux, les panneaux étant répartis en au moins une couche de panneaux qui définit une face externe ayant une surface déterminée ;
- une couche de protection thermique comprenant au moins un matériau de stockage de chaleur latente réparti dans toute la couche de protection thermique ;

dans lequel la couche de protection thermique présente une face interne directement en vis-à-vis de la couche de panneaux et une face externe, de sorte que la température de ladite face interne peut être inférieure à la température de la face externe de la couche de protection thermique lorsque l'ensemble d'isolation thermique est soumis à une montée en température du côté externe,

et dans lequel la couche de protection thermique recouvre ladite face externe de la couche de panneaux et présente une épaisseur inférieure ou égale à l'épaisseur de chacun des panneaux isolant de ladite couche de panneaux, le recouvrement de ladite face externe de la couche de panneaux par la couche de protection thermique étant continu et/ou tel que la couche de protection thermique s'étend sur une surface au moins égale à ladite surface déterminée.

Ainsi, les panneaux isolants, par exemple de type PIV, sont maintenus et protégés thermiquement sous une couche adaptée pour accumuler de chaleur en cas de montée excessive de température du côté extérieur d'un bâtiment.

Dans le cas d'un ensemble d'isolation thermique utilisé dans un composant de toiture exposé au soleil (par exemple exposé dans la direction sud dans une ville méditerranéenne), il est évident que la paroi à isoler est très sollicitée en température. La solution proposée ci-dessus permet de bénéficier d'une isolation efficace et peu encombrante (par utilisation d'une couche mince de panneaux de type PIV), et durable de surcroît. La protection thermique des panneaux PIV est en pratique efficace, même avec une épaisseur inférieure ou égale à la couche de panneaux PIV.

L'aspect continu ou en pleine correspondance avec le panneau PIV sous-jacent de la protection thermique est avantageux aussi du fait que cette protection forme typiquement une barrière à l'air et à la vapeur d'eau. Cela empêche donc la dégradation de l'enveloppe barrière des panneaux, qui conserve une excellente performance d'isolation au cours du temps.

L'enveloppe externe du panneau de type PIV reste parfaitement intègre lorsque des efforts s'exercent sur la couche supérieure de l'ensemble d'isolation thermique et il est permis de rapprocher au maximum les panneaux PIV adjacents (la couche d'isolation thermique étant alors définie essentiellement par les panneaux PIV, les espaces intercalaires pouvant être négligeables). L'écartement entre les panneaux PIV restant très faible, sans possibilité de circulation d'air ou autre fluide le long des tranches des panneaux, au moins du fait de l'accolement des panneaux contre la couche de protection thermique et entre eux dans une rangée de panneaux. On obtient ainsi une étanchéité à l'air. Le cas échéant un joint additionnel peut être prévu à proximité des organes de positionnement servant à l'interconnexion.

Dans divers modes de réalisation de l'ensemble d'isolation thermique selon l'invention, on peut éventuellement avoir recours en outre à l'une et/ou à l'autre des dispositions suivantes :

- les panneaux isolants sont agencées dans au moins une rangée et une zone de jonction est définie entre deux panneaux isolants adjacents dans une rangée, tandis que la couche de protection est seulement interrompue dans des zones décalées par rapport à la zone de jonction pour ne pas coïncider avec une arête des panneaux de type PIV (un élément mince, d'une épaisseur préférentiellement inférieure à 3 ou 5 mm, séparant par exemple deux éléments adjacents de la couche de protection thermique) ;
- les panneaux isolants ont chacun quatre côtés dont deux côtés opposés parallèles séparés l'un de l'autre d'une distance inférieure à 2 ou 3 mm ou accolés l'un à l'autre dans la couche de panneaux ;
- la couche de protection thermique est souple, afin de pouvoir être déroulée et fixée sur la surface externe de la couche de panneaux, de préférence par utilisation d'un matériau adhésif ;
- des organes de positionnement sont pourvus chacun de deux cavités dont l'une dite première cavité est remplie par un bord d'au moins un panneau des panneaux isolants et l'autre dite deuxième cavité est remplie par un bord latéral d'un élément au moins de la couche de protection thermique, les deux cavités étant adjacentes ;
- la couche de protection thermique comporte ou supporte des organes de positionnement pour bloquer en position au moins un panneau déterminé des panneaux isolants et délimiter avec ladite face interne un logement d'insertion pour recevoir un côté du panneau déterminé, ce grâce à quoi la couche de panneaux est accolée à la face interne de la couche de protection thermique ;
- les organes de positionnement comprennent un premier organe de positionnement avec une base s'étendant longitudinalement selon une première direction, et un deuxième organe de positionnement avec une base s'étendant longitudinalement selon une deuxième direction, sachant que la première direction est perpendiculaire à la deuxième direction, chacune de la première direction et de la deuxième direction étant parallèle à la couche de panneaux ;

- au moins un des panneaux isolants est engagé contre la base du premier organe de positionnement et contre la base du deuxième organe de positionnement ;
- les organes de positionnement comprennent une portion plane qui s'insère dans la couche de panneaux et présente une conductivité thermique inférieure ou égale à 0,6 W m$^{-1}$ K$^{-1}$ et de préférence inférieure à 0,25 W m$^{-1}$ K$^{-1}$ ; dans ce qui suit on entend par portion plane tous moyens s'étendant dans le plan longeant au moins une tranche latérale de panneau et qui fait typiquement la liaison avec au moins un organe de retenue placé du côté de la face interne de la couche de panneaux isolants ;
- la portion plane qui s'insère dans la couche de panneaux présente une épaisseur au moins deux fois plus mince que l'épaisseur de la couche de protection thermique, l'épaisseur de la portion plane étant de préférence inférieure ou égale à 3 mm ;
- les organes de positionnement comprennent des éléments de retenue en saillie depuis une surface plane de ladite face interne, chacun des éléments de retenue comportant ladite portion plane et une languette raccordée à une extrémité de la portion plane, les languettes permettant un maintien d'une position accolée entre la face interne de la couche de protection thermique et les panneaux isolants de la couche de panneaux (grâce à ces dispositions on bloque les panneaux de type PIV en évitant le risque de les percer, tout en limitant les ponts thermiques) ;
- la couche de protection thermique est rigide pour former une protection mécanique et comporte les organes de positionnement, ces organes de positionnement comprenant au moins un orifice transversal pour permettre le passage d'un insert de fixation (orifice transversal débouchant des deux côtés) ou étant pourvus d'inserts de fixation ;
- la distance entre la face externe de la couche de panneaux et la face externe de la couche de protection thermique est inférieure à 20 mm, et de préférence inférieure à 10 mm (ainsi on définit une couche protectrice mince qui permet à l'ensemble d'avoir une épaisseur typiquement très inférieure à 70 mm) ;
- l'ensemble est recouvert par un parement externe et la couche de protection thermique comprend des organes de montage configurés pour que le parement externe soit monté amovible par rapport à la couche de protection thermique ;
- le matériau de stockage de chaleur latente est un matériau à changement de phase dont la température de fusion est comprise entre 25°C et 45°C, de préférence comprise entre 30°C et 40°C, ce matériau à changement de phase ayant une chaleur latente de fusion comprise entre 100 kJ/kg et 300 kJ/kg, de préférence entre 220 et 260 kJ/kg (avec ce paramétrage, il a été constaté une bien meilleure efficacité qu'avec un MCP ayant une température de fusion inférieure ou égale à 25°C, qui n'empêche pas une montée de température du côté de la face interne au-delà de 40°C pendant la journée lorsque l'épaisseur de la couche de protection thermique est inférieure à 10-15 mm et que la température extérieure de la toiture atteint des pics de l'ordre de 45-50°C) ;
- la couche de protection thermique est isolante à l'humidité (ceci permet de protéger l'enveloppe barrière et allonger très significativement la durée du vie de l'ensemble d'isolation thermique).

Par ailleurs, l'invention a également pour objet un procédé d'assemblage d'un ensemble d'isolation thermique selon l'invention, in situ dans un bâtiment, en utilisant une couche de protection thermique comprenant au moins un matériau de stockage de chaleur latente et qui est de préférence isolante à l'humidité, le procédé comprenant les étapes consistant essentiellement à :

- rendre solidaire de la couche de protection thermique une pluralité de panneaux isolants ayant chacun une forme de plaque avec deux tranches parallèles opposées et une même épaisseur, chacun des panneaux comprenant un matériau poreux résistant à la compression et une enveloppe barrière étanche aux gaz, fermée sous vide, qui renferme le matériau poreux, de façon à répartir les panneaux en au moins une couche de panneaux, sachant que la couche de protection thermique présente une épaisseur inférieure ou égale à l'épaisseur de chacun des panneaux isolants ;
- lors de la fixation des panneaux isolants, accoler chacun des panneaux isolants contre une même face interne de la couche de protection thermique, de sorte que la couche de protection thermique recouvre continûment une face dite externe de la couche de panneaux ;
- placer la couche de protection thermique du côté extérieur du bâtiment et la couche de panneaux du côté intérieur, de sorte que la température de ladite face interne peut être inférieure à la température d'une face externe de la couche de protection thermique lorsque l'ensemble d'isolation thermique est soumis à une montée en température du côté externe.

Le procédé permet avantageusement de former une couche d'isolation thermique mince et durablement efficace. Le recouvrement du côté externe permet de fermer de manière étanche le volume intérieur qui contient le ou les panneaux de type PIV, de façon à supprimer toute circulation d'air externe le long des parois du panneau.

D'autres caractéristiques et avantages de l'invention apparaîtront au cours de la description suivante de plusieurs de ses modes de réalisation, donnés à titre d'exemples non limitatifs, en regard des dessins joints dans lesquels :

- la figure 1A est une vue en coupe illustrant un ensemble d'isolation thermique selon un premier mode de réalisation de l'invention ;
- la figure 1B est une vue en coupe illustrant un ensemble d'isolation thermique selon un deuxième mode de réalisation de l'invention ;
- la figure 2 est une vue en coupe illustrant un ensemble d'isolation thermique selon un troisième mode de réalisation de l'invention ;
- la figure 3A est une vue en coupe illustrant un ensemble d'isolation thermique selon un quatrième mode de réalisation de l'invention ;
- les figures 3B et 3C illustrent un mode de recouvrement entre un panneau isolant PIV et un élément d'une couche de protection thermique ;
- la figure 3D est une vue en perspective d'un profilé utilisable pour permettre le recouvrement de la couche de panneaux isolants PIV par la couche de protection thermique ;
- la figure 4A est une vue en coupe illustrant un ensemble d'isolation thermique selon un cinquième mode de réalisation de l'invention ;
- la figure 4B est une vue en perspective illustrant un exemple de superposition avec décalage entre un panneau isolant PIV et un élément de la couche de protection thermique, utilisable pour former l'ensemble d'isolation thermique de la figure 4A ;
- la figure 5 illustre schématiquement un bâtiment recouvert d'ensembles d'isolation thermique selon l'invention.

Sur les différentes figures, les mêmes références désignent des éléments identiques ou similaires. Les dimensions dans le sens de l'épaisseur ont été volontairement exagérées dans certaines figures afin d'améliorer la visibilité des différentes couches.

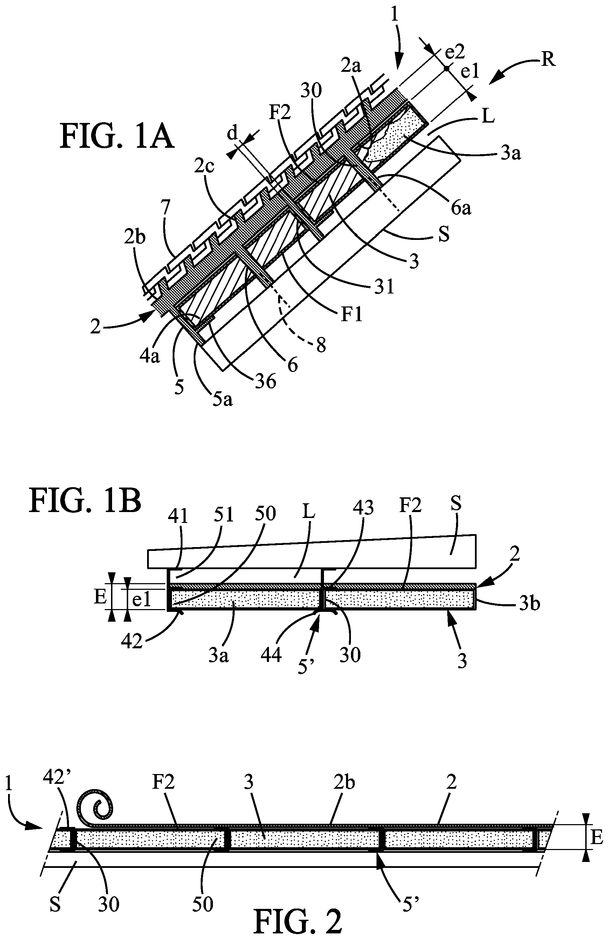

Des formes de réalisation d'un ensemble d'isolation thermique 1 avec une couche de protection thermique 2 recouvrant une couche thermiquement isolante essentiellement formée de panneaux isolants 3 de type PIV sont bien visibles sur les figures 1A, 1B et 2. Dans l'exemple de la figure 1A, la couche de protection thermique 2 contient au moins un matériau de stockage de chaleur latente réparti dans toute la couche de protection thermique 2. La couche de protection thermique 2 est ici rigide. Elle peut ainsi former une ossature rigide qui supporte les panneaux 3 de la couche thermiquement isolante. Une protection mécanique est ainsi obtenue pour les panneaux 3 de type PIV.

Chacun des panneaux 3 a ici un format parallélépipédique avec la même épaisseur e1 (cette épaisseur e1 étant typiquement la plus petite des dimensions des panneaux 3). Les panneaux 3 sont montés sur la couche de protection thermique 2, rigide, et répartis dans une couche qui présente plusieurs rangées R de panneaux 3 de même largeur. Cette couche présente une face interne F1 bien visible sur la figure 1A et une face externe F2 opposée à la face interne F1. La face externe F2 est directement en vis-à-vis de la face interne 2a de la couche de protection thermique 2.

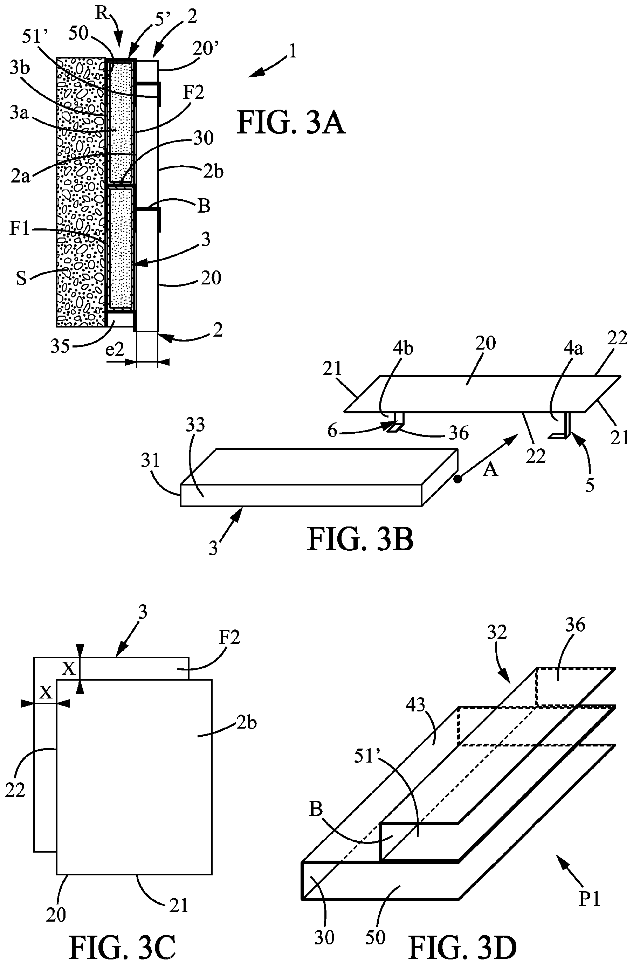

Les panneaux 3 forment des rangées R. Dans chaque rangée R, on peut voir que deux côtés parallèles de panneaux 3 adjacents sont séparés l'un de l'autre d'une distance d inférieure à environ 2 ou 3 mm (cf. figures 1A, 1B, 2, 3A, 4a et 6). Le mode de positionnement des panneaux 3 peut correspondre à l'illustration de la figure 3B, avec un panneau 3 soutenu par des organes de positionnement 5, 6 qui peuvent être ancrés à une extrémité dans la couche de protection thermique 2 (du côté de la face interne 2a), par exemple en venant de matière avec la face interne 2a de la couche de protection thermique 2. L'autre extrémité 5a, 6a de ces organes de positionnement 5, 6 est prévue par exemple pour s'appuyer sur un substrat S du bâtiment.

Dans une autre forme de réalisation préférée, on peut prévoir que des panneaux 3 soient accolés l'un à l'autre par leur tranches 31 perpendiculaires à la rangée R, avec un soutien seulement par les organes de positionnement 6 ou des inserts d'appui 32 similaires longeant les tranches 33 de panneau 3 parallèles à la rangée R. Optionnellement, un contact de soutien est également obtenu par un maintien contre des surfaces de butée prévues aux extrémités des rangées R. Les organes de positionnement 6 peuvent présenter une longueur au moins égale à celle des panneaux 3 de type PIV dans la direction d'une rangée R et former un profilé.

Le recouvrement de la face externe F2 de la couche de panneaux 3 par la couche de protection thermique 2 est ici continu et/ou tel que la couche de protection thermique 2 s'étend sur une surface au moins égale à la surface formée par la face externe F2. De cette façon, chacun des panneaux 3 est entièrement recouvert par une portion correspondante de la couche de protection thermique 2.

En référence à la figure 1A, plusieurs panneaux 3 de type PIV standards sans protection mécanique associée sont insérés respectivement dans des logements d'insertion 4a, 4b formés par des organes de positionnement 5, 6 de la couche de protection thermique 2. La profondeur des logements d'insertion 4a, 4b est identique et ici égale à l'épaisseur e1 des panneaux 3. Ainsi, la couche d'isolation thermique est accolée contre la face interne 2a de la couche de protection thermique 2. On peut ainsi loger de manière ajustée les panneaux 3 en forme de plaque.

Lorsque la température extérieure au bâtiment est particulièrement élevée et/ou le rayonnement solaire (ou autre flux quelconque de chaleur) fait monter la température sur l'extérieur de l'ensemble d'isolation thermique 1, la couche de protection thermique 2 permet d'éviter la transmission rapide du flux de chaleur aux panneaux 3 de la couche d'isolation thermique sous-jacente. Cette disposition est en pratique avantageuse pour permettre d'isoler durablement un espace situé sous un élément de toiture, des combles ou autres zones similaires d'un bâtiment exposées directement à un flux solaire. En effet lorsque l'ensemble d'isolation thermique 1 est soumis à une montée en température du côté externe, la température de la face interne 2a de la couche de protection thermique 2 peut être inférieure à la température de sa face externe 2b, et ainsi une protection thermique est obtenue pour les panneaux 3 de type PIV.

De façon connue en soi et comme montré sur la figure 1B, l'âme isolante 3a, poreuse, du panneau 3 est mise sous vide et enfermée dans l'enveloppe barrière étanche 3b qui est de préférence souple. L'effet barrière de l'enveloppe 3b ne se dégrade pas si la température de la face externe F2 reste inférieure à 40°C ou, dans certains cas, inférieure à 45°C (il s'agit ici de panneaux 3 de type PIV standards). L'enveloppe barrière étanche 3b est typiquement thermo-soudée et la soudure est de préférence réalisée en périphérie latérale, dans un plan intermédiaire entre la face interne F1 et la face externe F2 des panneaux 3.

En prenant en compte le cycle de montée en température habituel, qui suit l'alternance jour / nuit, il a été constaté qu'une mince couche de protection thermique 2, par exemple de seulement 5 mm d'épaisseur, le cas échéant associée à une lame d'air comme dans le cas de la figure 1B et/ou associé à des composants externes de toiture tels que des tuiles 7 (cas de la figure 1A) permet d'éviter les températures extrêmement nuisibles aux panneaux 3 de type PIV. Inversement, il a été constaté qu'une dégradation des performances des panneaux 3 est inévitable si on utilise un isolant classique, même plus épais (isolant ayant une résistance thermique proche de celle du polyuréthane, par exemple de la laine de verre ayant une épaisseur de 10 cm), en remplacement de la couche de protection thermique 2.

Les paramètres d'épaisseur e2 de la couche de protection thermique 2 et les paramètres représentatifs de l'absorption de calories par le matériau de stockage de chaleur latente sont par exemple choisis de façon à ce que la différence de température entre la face externe 2b et la face interne 2a soit de l'ordre de 10°C lorsque la température extérieure est de l'ordre de 40°C. Dans ce qui suit, l'épaisseur e2 désigne l'écartement entre la face externe 2b et la face interne 2a (sans prendre en compte les éventuels reliefs saillants depuis la face externe 2b), correspond à l'épaisseur effective de matériau servant à protéger thermiquement les panneaux 3.

A titre d'exemple, le matériau de stockage de chaleur latente est un matériau à changement de phase dont la température de fusion est comprise entre 25°C et 45°C, de préférence comprise entre 30°C et 40°C. Selon une option préférée, la couche de protection thermique 2 contient un matériau rigide enveloppant ou encapsulant le matériau de stockage de chaleur latente qui est dans un état liquide (au moins partiellement) au-delà de sa température de fusion.

Le matériau à changement de phase (MCP) a une chaleur latente de fusion typiquement comprise entre 100 kJ/kg et 300 kJ/kg, de préférence entre 220 et 260 kJ/kg. Il a été constaté, dans le cas d'un ensemble d'isolation placé sous une toiture orientée sud à 45° (test effectué à Nice), qu'une bien meilleure efficacité est obtenue lorsque le matériau MCP a une température de fusion nettement supérieure à 25°C, et typiquement au moins de l'ordre de 30°C (avec préférentiellement une température de fusion strictement supérieure à 30°C). Avec des couches 2 dont l'épaisseur e2 est seulement de 5 mm, un matériau MCP ayant une température de fusion en dehors de la gamme [30-40°C], en l'occurrence d'environ 28°C, ne donne pas pleinement satisfaction pour protéger les panneaux 3. On peut dans ce cas augmenter l'épaisseur e2 à 10 mm par exemple. Cependant, augmenter l'épaisseur e2 apparaît préjudiciable à l'effet avantageux de compacité procuré par les panneaux 3 de type PIV. C'est pourquoi on évitera d'utiliser des matériaux MCP ayant une température de fusion trop basse, par exemple inférieure ou trop proche de 25°C, sauf si l'on se trouve dans des conditions autorisant l'utilisation d'une épaisseur e2 plus importante (par exemple supérieure ou égale à 40 ou 50 mm).

Le tableau suivant indique, de manière non limitative, des exemples de matériau MCP adaptés pour absorber et accumuler efficacement des calories. La catégorie M1 concerne les matériaux MCP à base de paraffine, la catégorie M2 concerne les matériaux à base de sels hydratés et la catégorie M3 concerne les MCP à base d'un mélange eutectique. On trouve également d'autres catégories, notamment des MCP organiques (acides gras par exemple).

Tableau 1

| Matériaux | | T fusion (°C) | Enthalpie de fusion (kJ/kg) | Conductivité thermique (W/mk) | Densité (kg/m3) |
|---|---|---|---|---|---|
| M1 | Octadecane | 28 | 244 | 0,17 à 0,26 | 760 |

(suite)

| Matériaux | | T fusion (°C) | Enthalpie de fusion (kJ/kg) | Conductivité thermique (W/mk) | Densité (kg/m3) |
|---|---|---|---|---|---|
| M2 | Na2SO4·10H2O 60% | 32 | 251 | / | / |
| | Na(CH3COO).3H2O+ 40%CO (NH2)2 | 30 | 200,5 | | |
| | CaCL2.6H2O | 29 | 171 | 0,540 (liquide 61,2°C) | 1562 (liquide 32°C) |
| M3 | 66,6%CaCL2.6H2O+ 33,3% Mgcl20. 6H20 | 25 | 127 | - | - |
| | 48%CaCL2+4,3% NaCl+47,3%H20 | 26,8 | 188 | - | - |
| | 47%Ca(NO3)2.4H2O +53%Mg (NO3)2 6H20 | 30 | 136 | - | - |

Les éléments 20 incluant les matériaux à changement de phase utilisés pour le stockage thermique latent présentent par exemple une conductivité thermique inférieure à 1,5 W/m.K, et de préférence comprise entre 0,15 et 1 W/m.K.

Dans des variantes de réalisation, on peut remplacer le matériau MCP par un matériau à forte inertie thermique d'une nature différente, par exemple avec adsorption ou absorption (le changement d'état étant alors une évaporation du gaz adsorbé ou absorbé). Plus généralement, la différence de température entre les faces de la couche de protection thermique 2, en cas de température externe localement supérieure ou égale à un seuil supérieur à 40°C, par exemple 45 ou 50°C, doit typiquement être nettement supérieure à 5°C. Comme le cycle journalier va ensuite faire baisser la température externe, on comprend qu'il n'y aura pas la même augmentation de température du côté de la face interne 2a.

On peut noter que l'épaisseur e2 est de préférence inférieure à l'épaisseur e1 des panneaux 3, afin de ne pas réduire l'avantage de réduction d'encombrement lié à l'utilisation de panneaux 3 de type PIV, qui sont relativement minces. Sachant que les panneaux 3 de type PIV ont une épaisseur typiquement inférieure ou égale à 50 mm, il est ainsi préférable que ces panneaux 3 forment au moins la moitié de l'épaisseur E totale de l'ensemble d'isolation thermique 1.

Concernant la fonction d'isolation thermique, il a été constaté qu'un écartement trop important entre deux panneaux 3 adjacents de type PIV et une conductivité trop élevée du matériau intercalaire (inserts d'appui 32 ou organes 5, 6 de positionnement) étaient deux causes majeures de dégradation de la performance d'isolation globale. C'est pourquoi il s'avère important d'utiliser un matériau ayant une conductivité thermique faible inférieure à 0,6 W $m^{-1}$ $K^{-1}$, en particulier au niveau des portions planes 30 qui s'insèrent dans la couche de panneaux 3. Ces portions planes 30 ont typiquement une épaisseur de l'ordre de 1-2 mm. Une épaisseur de l'ordre de 3-4 mm reste intéressante à condition d'utiliser un matériau pour ces portions planes 30 qui présente une conductivité thermique environ deux fois plus faible, de préférence inférieure ou égale à 0,25 W $m^{-1}$ $K^{-1}$, plus préférentiellement inférieure à 0,1 W $m^{-1}$ $K^{-1}$ ou même 0,065 W $m^{-1}$ $K^{-1}$. Le matériau est dans ce cas considéré comme thermiquement isolant.

Bien entendu, les organes de positionnement 5, 6 ou inserts d'appui similaires 32 qui présentent cette portion plane 30 peuvent présenter en toute part une conductivité thermique inférieure ou égale à 0,6 W $m^{-1}$ $K^{-1}$ et de préférence inférieure à 0,25 W $m^{-1}$ $K^{-1}$.

Dans l'exemple de la figure 1A, chacune des portions planes 30 est directement raccordée à la face interne 2a et il existe deux orientations de ces portions planes, de sorte que l'on distingue :

-    les portions planes 30 situées dans un plan parallèle à une direction de rangée R, qui appartiennent à un premier organe de positionnement 5 ; et
-    les portions planes 30 situées dans un plan perpendiculaire à une direction de rangée R, appartenant à un deuxième organe de positionnement 6.

Plus généralement, un avantage d'utiliser des portions planes 30 minces est que l'écartement entre les deux tranches de panneaux 3 adjacents peut rester bien inférieur à 5 mm, et de préférence inférieur ou égal à 2 ou 3 mm. Or il a été constaté une dégradation assez brutale de la performance de la couche de panneaux 3 lorsque cet écart atteint ou dépasse 4 mm et que le matériau intercalaire n'est pas thermiquement isolant. Dans ce cas, un transfert de chaleur par conduction se réalise de façon importante au niveau des jonctions entre les rangées et le bénéfice du super isolant dans les panneaux 3 est très dégradé, sauf à utiliser dans les jonctions une matière ayant une conductivité thermique s'approchant au mieux de celle des panneaux 3 de type PIV. Pour des raisons de coût de l'ensemble d'isolation thermique 1, (i.e. éviter le recours à une matière isolante plus technique dans l'ossature), on comprend qu'il est préférable que l'écart entre les panneaux 3 adjacents soit réduit à moins de 3 mm ou éventuellement moins de 4 mm.

A nouveau en référence à la figure 1A, l'ensemble d'isolation thermique 1 est ici monté sur une paroi formant un substrat S, avec un espacement constant. Cet espacement, qui forme une lame d'air L, est obtenu grâce à des entretoises d'appui 5a, 6a des organes de positionnement 5, 6, qui font saillie par rapport à la face interne F1 de la couche de panneaux 3 et prolongent les portions planes 30.

Pour fixer l'ensemble d'isolation thermique 1 au substrat S, ici un élément de toiture ou paroi murale inclinée, un trou préformé peut être prévu (ou fente équivalente ou toute autre partie femelle) dans l'une et/ou l'autre des entretoises d'appui 5a, 6a. Dans cet exemple, on peut ainsi utiliser une vis 8, clou, insert de fixation ou élément d'ancrage analogue qui ne traverse pas la couche de panneaux 3 et qui peut réaliser la connexion entre la couche de protection thermique 2 et le substrat S. Un tel élément d'ancrage peut le cas échéant s'engager avec la partie femelle correspondante alors que la superposition entre les panneaux 3 de type PIV et la couche de protection thermique 2 a déjà été réalisée.

Dans des variantes de ce premier mode de réalisation, on peut prévoir un trou traversant entièrement la couche de protection thermique 2 au niveau d'un insert d'appui 32. Ce trou permet de recevoir une vis 8 ou autre élément d'ancrage ayant une tête de fixation accessible du côté extérieur de l'ensemble d'isolation thermique 1 (c'est-à-dire du côté de la face externe 2b dans l'exemple de la figure 1A).

Alternativement, un insert de fixation peut être monté ou formé sur l'extrémité des entretoises d'appui 5a, 6a. On peut prévoir par exemple des têtes clipsables qui coopèrent dans un rail d'ancrage (par exemple une fourrure) préalablement installé sur la face externe du substrat S. L'utilisation de rails d'ancrage pour supporter l'ensemble d'isolation thermique 1 et l'utilisation de têtes clipsables est avantageux car, une fois ces rails installés, un opérateur peut réaliser le montage de l'ensemble d'isolation thermique 1 sans outil, très rapidement.

Bien entendu, un ensemble d'isolation thermique 1 du type montré sur la figure 1A peut être obtenu en remplaçant tout ou partie des organes de positionnement 5, 6 par des inserts d'appui 32 (amovibles par rapport à la couche 2), par exemple montés sur la face interne 2a ou faisant partie d'un dispositif de positionnement des deux couches de l'ensemble 1, comme dans l'exemple de la figure 3D. Les inserts d'appuis 32 peuvent être optionnellement réalisés à partir d'une même pièce profilée, par exemple en matière plastique, découpable.

Bien entendu, au moins une couche additionnelle peut être prévue, par exemple pour obtenir un effet spécifique d'absorption de liquide ou barrière au gaz le long de la face interne 2a de la couche de protection thermique 2. De préférence, la couche de protection thermique 2 inclut cette fonction de barrière.

Lorsque l'ensemble 1 sert à supporter des tuiles 7 ou un autre parement externe, la face extérieure 2b peut avantageusement être crénelée afin de servir de support adapté. Autrement dit, on comprend que la face 2b définit la surface externe de l'ensemble d'isolation thermique 1, et peut être pourvue de reliefs formant des organes de montage 2c lorsque cet ensemble 1 est destiné à une fonction de support d'éléments de moindre surface que celle de la couche de protection thermique 2. Les organes de montage 2c sont configurés pour que le parement externe, ici les tuiles ou autres éléments soit montés amovibles par rapport à la couche de protection thermique 2. Le crénelage ou autres reliefs similaires peut être soit rapporté soit intégré au matériau constitutif de la couche de protection thermique 2.

Une couche intermédiaire peut éventuellement être intégrée pour renforcer la protection mécanique conférée par la couche de protection thermique 2. Cette couche intermédiaire (non montrée) est alors placée du côté intérieur pour définir la face interne 2a. Cette couche intermédiaire peut permettre d'empêcher l'altération de l'enveloppe barrière 3b, même en cas de poinçonnement sur les tuiles 7 ou autre surface externe similaire (un effet de poinçonnement se produisant par exemple si quelqu'un marche sur la toiture). De préférence, le matériau à effet de stockage de chaleur latente qui constitue la couche de protection thermique 2 peut être composite (par exemple avec une encapsulation de MCP ou l'utilisation d'une enveloppe intérieurement renforcée par des nervures) et déjà permettre, par lui-même, une absorption de ce type d'effort.

La couche 2 ou la couche additionnelle de protection mécanique peut aussi permettre une isolation à l'humidité. Dans ce cas, on utilise une couche de matériau qui a typiquement un facteur de résistance à la vapeur d'eau $\mu$ de l'ordre de 50 000 à 500 000. Ce facteur de résistance à la diffusion de la vapeur d'eau (noté $\mu$) est défini notamment dans le fascicule N° 2/5 de la réglementation thermique Française RT 2000 : il s'agit du rapport sans unité entre la perméabilité de l'air - égale à $1,9.10^{-10}$ kg/(m.s.Pa) - sur celle du matériau considéré. Ce facteur est également décrit dans la norme NF EN 12524 et EN ISO 93 46. Une feuille en une matière résiliente peut être préférée pour former l'élément de protection 20, typiquement à la condition que cette matière soit étanche à l'eau liquide, de forte résistance à la diffusion de vapeur d'eau, et mécaniquement protectrice. Une épaisseur d'environ 0,5 à 3 mm peut être suffisante lorsqu'on utilise un élément ou une couche de protection additionnelle.

Dans un deuxième mode de réalisation de l'ensemble d'isolation thermique 1, illustré sur la figure 1B, le montage est réalisé sous un élément de toiture de bâtiment ou substrat S analogue.

Comme dans le premier mode de réalisation, les panneaux 3 présentent une épaisseur e1 qui forme la majorité de l'épaisseur E de l'ensemble d'isolation thermique 1 et les organes de positionnement 5' permettent d'accoler la couche de protection thermique 2 contre la face externe F2. Les panneaux 3 sont maintenus dans des logements d'insertion ou cavités définies par des profilés. Ces profilés forment une catégorie d'organes de positionnement 5' dont les portions planes 30 sont parallèles entre elles dans cet exemple non limitatif.

Ici, les organes de positionnement 5' sont pourvus chacun de deux cavités 50, 51 dont l'une (première cavité 50) est remplie par un bord d'un ou plusieurs panneaux 3 de type PIV et l'autre (deuxième cavité 51) contient un bord latéral d'un élément 20 de la couche de protection thermique 2. Les deux cavités 50 et 51 sont adjacentes et juxtaposées. Du fait de la faible épaisseur des éléments 20 en forme de plaque rigide ou flexible, une lame d'air L s'étend entre le substrat S et l'ensemble d'isolation thermique 1.

Bien entendu, la couche de protection thermique 2 peut se présenter ici sous une forme non rigide. Le côté flexible est permis dès lors que la couche de panneaux isolants 3 est supportée par une ossature rigide en appui sur un substrat S de bâtiment.

Les profilés en une pièce (ou éventuellement en plusieurs pièces assemblées), qui forment les organes de positionnement 5', comprennent ici une base qui inclut la portion plane 30 d'insertion au travers de la couche de panneaux 3. Ces profilés s'étendent longitudinalement entre leurs extrémités et s'étendent en profondeur entre une portion 41 de fixation contre le substrat S et une patte 42 de retenue d'un ou plusieurs panneaux 3. La portion 41 de fixation est fixée sur le substrat S d'une façon connue en soi, par exemple par une ou plusieurs vis ou éléments d'ancrage analogues. Une patte intermédiaire 43 du profilé est optionnellement prévue pour s'étendre entre la couche isolante formée par les panneaux 3 et la couche thermiquement protectrice 2.

La portion de fixation 41, la patte de retenue 42 et la patte intermédiaire 43 peuvent s'étendre depuis un même côté par rapport à la base du profilé. La patte de retenue 42 peut être flexible pour faciliter l'insertion du panneau 3 dans le logement associé à la cavité 50. Au moins un ergot flexible 44 ou languette analogue peut être prévu dans le prolongement de la patte de retenue 42 et de l'autre côté de la portion plane 30. Ainsi, le panneau 3 est maintenu et bloqué en position. Si des éléments 20 sont préalablement assemblés sur les panneaux 3, alors les modules bicouche ainsi formés peuvent être insérés dans une unique cavité 50 et la patte de retenue 42 peut être supprimée.

On peut noter que les organes de positionnement 5, 6, 5' présentent, dans ces premier et deuxième modes de réalisation, une base ou portion de base sur lequel au moins un des panneaux isolants est engagé (par une de ses tranches latérales), et de préférence avec un engagement d'un panneau 3 de chaque côté de la base lorsque celle-ci forme une portion plane 30 d'insertion entre des panneaux 3 de la couche d'isolation. Dans le premier mode de réalisation, deux tranches 31, 33 perpendiculaires d'un panneau peuvent s'appuyer contre des portions planes 30 associées des organes de positionnement 5, 6. On peut bien entendu intervertir ces organes de positionnement 5, 6 avec les organes de positionnement 5' montrés dans le cas du deuxième mode de réalisation et/ou utiliser une combinaison d'organe de positionnement 5' et 6.

Plus généralement, on comprend que la couche de protection thermique 2 comporte ou supporte des organes de positionnement 5, 6, 5' pour bloquer en position au moins un des panneaux isolants 3 et délimiter avec la face interne 2a un logement d'insertion pour recevoir au moins un côté de ce ou ces panneaux 3.

Dans l'exemple de la figure 2, un troisième mode de réalisation de l'ensemble d'isolation thermique 1 est illustré. Le montage est ici réalisé du côté extérieur d'un substrat S de bâtiment tel qu'un élément de toiture.

La couche de protection thermique 2, qui contient le matériau MCP, peut être stockée et transportée en rouleau. Dans cet exemple, la largeur de la couche de protection thermique 2 peut être supérieure à la largeur des panneaux 3 (correspondant à la largeur d'une rangée R) et ainsi recouvrir de manière continue une ou plusieurs rangées R de panneaux 3 de la couche d'isolation thermique.

Ici, la couche de protection thermique 2 comprend un matériau MCP qui est, de préférence présent sous une forme encapsulée dans une matière étanche aux liquides et aux gaz. La couche de protection thermique 2 assure ici non seulement la protection thermique mais aussi l'étanchéité à l'air et le pare pluie. Bien que le substrat S soit représenté horizontalement, on peut bien entendu utiliser cet ensemble d'isolation thermique 1 pour équiper ou former une paroi horizontale ou inclinée. Le substrat S peut consister en un composant de toiture qui présente une finition intérieure, par exemple en bois ou en plastique.

La couche de protection thermique 2 est souple et pliable, de sorte qu'elle peut être déroulée directement sur la face externe F2 de la couche de panneaux 3 et/ou sur des languettes 42' de maintien. L'utilisation d'adhésif peut être prévue sur les languettes 42' ou éventuellement directement sur les panneaux 3, par exemple si l'enveloppe 3b des panneaux 3 comporte une structure multicouche avec un film externe résistant durablement au contact avec une matière adhésive.

Ici dans l'exemple de la figure 2, des languettes 42' sont prévues pour un maintien d'une position accolée entre la face interne 2a de la couche de protection thermique 2 et les panneaux isolants 3 de la couche thermiquement isolante (du côté de la face externe F2). Ces languettes 42' font partie d'organes de positionnement 5', de type profilé, et prolongent une portion plane 30 qui s'insère dans la couche de panneaux 3. Au moins la portion plane 30 présente une conductivité thermique inférieure ou égale à 0,6 W m$^{-1}$ K$^{-1}$ et de préférence inférieure à 0,25 W m$^{-1}$ K$^{-1}$. Ici l'organe de positionnement 5' a une section en U et la portion plane 30 qui s'insère dans la couche de panneaux 3 présente une épaisseur au moins deux fois plus mince que l'épaisseur e2 de la couche de protection thermique 2. Par exemple si l'épaisseur e2 est environ égale à 5 ou 6 mm, alors l'épaisseur de la portion plane 30 est de préférence inférieure ou égale à 2,5 ou 3 mm.

Bien que le montage soit ici réalisé du côté extérieur du substrat S, on comprend que l'ensemble d'isolation thermique 1 peut être monté du côté intérieur, par exemple en utilisant des organes de positionnement 6 (avec des portions planes 30 longeant les tranches des panneaux 3) qui traversent les deux couches et sont fixés sur la face intérieure du substrat S. Les portions planes 30 peuvent s'insérer dans ce cas entre deux bords longitudinaux d'un élément 20 souple de la couche de protection thermique 2 et rejoindre le substrat S.

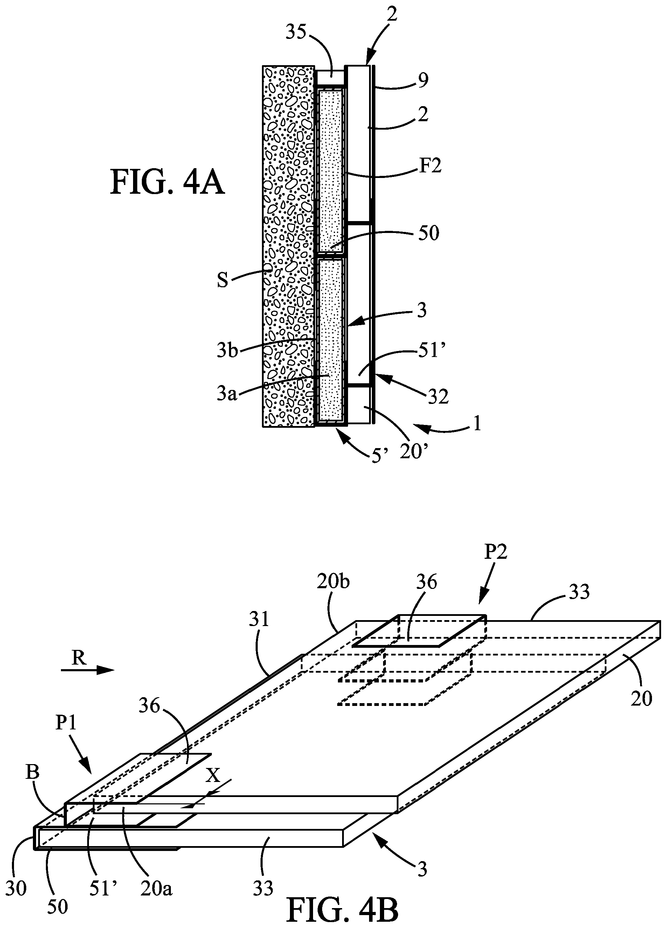

Dans l'exemple des figures 3A et 4A, un quatrième mode et un cinquième mode de réalisation de l'ensemble d'isolation thermique 1 sont illustrés, respectivement. Le montage est ici réalisé du côté extérieur d'un substrat S de bâtiment vertical, mais il pourrait tout aussi bien convenir pour un élément de toiture horizontal ou incliné.

Des profilés forment ici les organes de positionnement 5' et comprennent une première cavité 50 et une deuxième cavité 51', comme pour les profilés décrits sur la figure 1B. Cependant, la deuxième cavité 51' est ici décalée et moins profonde que la première cavité 50 servant à enserrer un ou des panneaux 3 de type PIV. On comprend qu'un élément 20 constitutif de la couche de protection thermique 2 s'étend jusqu'au fond de la deuxième cavité 51' et n'est espacé d'un autre élément 20 adjacent que par la base B qui est typiquement aussi mince que la portion plane 30.

La figure 3D montre un exemple de profilés P1 similaires aux organes de positionnement 5', formés par une superposition de deux portions à section en U avec décalage entre les bases. Ainsi la portion plane 30 est décalée par rapport à la base B de la portion à section U définissant la deuxième cavité 51'.

Dans l'exemple de la figure 3A, les organes de positionnement 5' présentent le même décalage que les profilés P1 et la couche de protection thermique 2 est composée d'éléments 20 en forme de plaque, de même épaisseur e2. Ces éléments 20 sont reçus dans les deuxièmes cavités 51', de préférence avec un ajustement serré. Les panneaux 3 ont été préalablement positionnés dans les premières cavités 50.

Du fait du décalage entre les cavités 50 et 51', on comprend que la pose de l'ensemble d'isolation thermique 1 peut nécessiter si besoin des modules d'adaptation 35 pour compléter les panneaux 3 de type PIV. Comme les panneaux 3 de type PIV ne peuvent pas être découpés, on peut ainsi compléter une rangée R (il s'agit ici d'une rangée verticale sur la figure 3A) en plaçant le long du substrat S un module d'adaptation 35 qui résulte typiquement d'une découpe. De tels modules d'adaptation 35 ont bien entendu des dimensions adaptées pour compléter la rangée R et peuvent s'engager de la même façon dans la cavité 50 de l'organe de positionnement 5' associé. Mais ils sont composés d'un isolant performant qui peut être rigide ou semi-rigide, de préférence en polyuréthanne ou matériau isolant à base d'aérogel de silice. Ceci autorise la coupe et le perçage à façon pour permettre l'adaptation aux dimensions de la surface à revêtir sur son pourtour.

D'autres matières peuvent être utilisées dans un tel module d'adaptation 35, par exemple une mousse thermodurcissable différente du polyuréthanne ou encore un bloc comprenant des fibres végétales et/ou minérales. Dans la mesure où ces modules d'adaptation 35 sont destinés à être découpés pour permettre l'adaptation périphérique aux dimensions du substrat S couvert, la différence de performance d'isolation thermique liée à la nature de l'isolant n'induira que des pertes thermiques minimes par rapport à la performance d'isolation globale obtenue sur la totalité de la surface.

Si des perçages sont prévus pour le passage de fluides ou de câbles ou encore d'inserts de fixation, alors on peut mettre à profit les modules d'adaptation 35 qui sont présents à la marge pour procéder à de tels perçages et/ou ancrages de fixation.

Alternativement, le décalage peut être prévu pour correspondre à une largeur d'un panneau de type PIV disponible dans le commerce (et plus étroit que les autres panneaux de la couche isolante). Cela permet de couvrir entièrement le substrat S par des panneaux 3.

Dans d'autres formes de réalisation, on peut prévoir d'assembler des éléments 20 n'ayant pas une forme parallélépipédique. Les éléments 20 peuvent ainsi présenter des organes de montage 2c comme dans le cas de la figure 1A ou présenter un format différent.

Dans la couche de protection thermique 2 montrée sur les figures 3A et 4A, les éléments 20 en forme de plaque peuvent présenter le même format sauf l'élément 20' utilisé pour compenser le décalage, à l'extrémité de la couche de protection thermique 2.

En référence aux figures 3A et 4A, le décalage permet ici aux éléments 20 de la couche de protection thermique 2 de couvrir entièrement les jonctions horizontales entre deux panneaux 3 adjacentes, du côté de la face externe F2. les jonctions verticales peuvent également être couvertes de façon analogue, en décalant latéralement la position des éléments 20.

Les figures 3B et 3C illustrent schématiquement un mode de recouvrement entre un panneau isolant 3 de type PIV et un élément 20 associé (ayant ici les mêmes dimensions en largeur et longueur) d'une couche de protection thermique 2. On peut voir que le panneau 3 s'emboîte en s'engageant dans les logements 4a, 4b (qui correspondent aux cavités 51, 51' dans le cas de profilés) des organes de positionnement 5, 6. La direction générale d'emboitement est illustrée par la flèche A. Ici les organes de positionnement 5 et 6 s'étendent à distance des bords 21, 22 de l'élément 20 en forme de plaque, de façon à créer un décalage entre les jonctions de panneaux 3 et les jonctions d'éléments 20 de la couche de protection thermique 2. On peut choisir la même distance X de décalage ou deux distances différentes de décalage.

Dans cet exemple, les organes de positionnement 5 et 6 comprennent des éléments de retenue en saillie depuis une surface plane de la face interne 2a pour définir les logements 4a et 4b fonctionnellement similaires aux cavités 51, 51'. Chacun de ces éléments de retenue comporte au moins un élément allongé, formant la portion plane 30 (il peut s'agir de deux portions de tiges coplanaires), et au moins une languette 36 raccordée à une extrémité de la portion plane 30. L'autre extrémité est raccordée à la portion de face interne 2a formée par l'élément 20 associé (jonction de matière), ou supportée par l'élément 20 associé (de préférence par une fixation amovible). Les languettes 36 maintiennent une position accolée des panneaux isolants 3 contre la face interne 2a de la couche de protection thermique 2. Optionnellement, une couche intermédiaire peut s'étendre le long des éléments 20 pour former la face interne 2a de la couche de protection thermique, par exemple pour former une barrière à la vapeur. Cette couche intermédiaire est par exemple en matériau hydrophobe différent du matériau en couche incluant un MCP. Il peut aussi s'agir d'une couche de protection mécanique, prévue par exemple pour empêcher l'altération de l'enveloppe barrière 3b des panneaux 3 même en cas de poinçonnement sur l'extérieur de l'ensemble d'isolation thermique 1.

En référence à la figure 4B, une variante de montage est représentée avec l'utilisation de profilés P1 et P2, qui peuvent éventuellement être identiques. Ces profilés P1, P2 comprennent chacun une première cavité 50 entièrement remplie par un même panneau 3. Un contact contre chaque portion plane 30 est réalisé en utilisant deux tranches différentes 32 et 33 respectives, perpendiculaires entre elles, de ce panneau 3. Les profilés P1 et P2, distincts et de préférence distants l'un de l'autre, sont positionnés transversalement l'un par rapport à l'autre. La deuxième cavité 51' du premier profilé P1 est ici, malgré un contact de la tranche 20b contre la base B, partiellement remplie pour permettre un décalage dans la direction perpendiculaire à la rangée R. En effet le coin 20a correspondant de l'élément 20 en forme de plaque est décalé par rapport à une extrémité longitudinale du premier profilé P1, d'une distance X.

Comme la deuxième cavité 51' est également décalée par rapport à la première cavité 50, on obtient un décalage dans deux directions perpendiculaires (dont l'une est la direction de la rangée R), dans un même plan parallèle à la couche de panneaux 3. Ce deuxième décalage peut correspondre à la même distance X, être supérieur ou inférieur à cette distance X.

Cette configuration avec double décalage peut permettre d'obtenir un ensemble d'isolation thermique 1 complètement similaire au cas illustré sur les figures 3A et 4A. Les pattes de retenue 36 et la base B forment ensemble des inserts d'appui 32 qui peuvent permettre de supporter une couche externe additionnelle.

Ainsi, comme visible sur la figure 4A, on peut placer une couche 9 formée d'au moins un matériau barrière à l'humidité, qui recouvre la face externe 2b de la couche de protection thermique 2. On peut également utiliser, en complément ou en remplacement de la couche 9, une couche d'isolation acoustique. Dans des variantes de réalisation, des tels inserts d'appui 32 peuvent faciliter un montage du côté interne d'une paroi de bâtiment, après que la couche de panneaux 3 et la couche de protection thermique ont été assemblées. L'assemblage par une telle ossature rigide formée de profilés P1 et P2 permet de faciliter le raccordement à une paroi, par exemple par collage et/ou utilisation d'éléments d'ancrage à des extrémités latérales de l'ensemble d'isolation thermique 1.

On comprend que le mode d'assemblage prévu pour les différents modes de réalisation précédemment décrits peut utiliser différents moyens structurels rigides pour former les organes de positionnement 5, 6, 5', P1, P2. Avec ce type d'ossature, l'assemblage entre les couches peut être réalisé sans collage. La couche de panneaux 3 est protégée des agressions mécaniques et hydriques.

Le fait d'utiliser des organes de positionnement 5, 6, 5', P1, P2, sans fixation par collage à l'interface entre les couches, peut bien entendu permettre de retirer l'une parmi la couche de protection thermique 2 et la couche de panneaux 3 (de sorte que l'une des couches est typiquement amovible par rapport à l'autre). On comprend que l'ossature rigide composée des organes de positionnement 5, 6, 5', P1, P2, peut de manière non limitative, soit être formée directement par le ou les éléments constitutifs de la couche de protection thermique 2 comme dans le cas des figures 1A et 3B, soit former un support de la couche de protection thermique 2 comme dans le cas des autres figures.

L'épaisseur E totale de l'ensemble d'isolation thermique 1 doit être comprise comme la somme de l'épaisseur e1 de la couche de panneaux isolants 3 de type PIV et la distance entre la face externe F2 de la couche de panneaux isolants 3 et la face externe 2b de la couche de protection thermique 2. Cette distance est par exemple inférieure à 20 mm et avantageusement inférieure ou égale à l'épaisseur e1. Lorsque la couche 2 est accolée directement contre la face externe F2, on comprend que cette distante devient l'égal de l'épaisseur e2. L'épaisseur totale E est significativement inférieure à 100 mm, et typiquement comprise entre 20 et 70 mm.

Un ensemble d'installation thermique 1 conforme à l'invention peut, de préférence, présenter un critère qualitatif qui combine les notions d'encombrement en épaisseur, de ponts thermiques et de performance de l'élément isolant (en l'occurrence un panneau 3 de type PIV). Un critère qualitatif de l'ensemble 1, qui correspond au ratio défini ci-dessous (ratio exprimé en cm$^{-2}$), satisfait ainsi la relation suivante :

$$K2/(E.d.K1) \geq 2$$

où

K1 est la conductivité thermique du panneau isolant protégé (en l'occurrence un panneau 3 de type PIV dans le cas de l'invention),

K2 est une constante de conductivité prise égale à 0,025 W m$^{-1}$ K$^{-1}$ (il s'agit de la valeur correspondant à une mousse de polyuréthane),

E est l'épaisseur formée par les deux couches (isolation et protection thermique), exprimée ici en cm,

d est la distance maximale d'écartement entre deux tranches de panneaux isolants 3 adjacents.

Concrètement, ce critère peut être choisi inférieur à 50 cm$^{-2}$. Une valeur plus élevée apparaît plus difficile à atteindre pour des applications courantes et de grande consommation (l'ensemble 1 ayant une épaisseur minimale de l'ordre de 0,8 ou 1 cm), notamment en raison du coût des matériaux ayant une valeur de conductivité thermique K1 inférieure à 0,007 W m$^{-1}$ K$^{-1}$ et des contraintes pour assurer la tenue mécanique de l'ensemble d'isolation thermique (on comprend que l'épaisseur d dépasse typiquement 0,1 cm pour l'une au moins des jonctions entre tranches 31 et 33, respectivement). Une valeur de l'ordre de 1 cm$^{-2}$, qui peut être rencontrée avec les paramètres suivants K1 = K2, E = 10 cm et d = 0,1 cm, n'est pas considérée satisfaisante du fait que l'encombrement correspondant en épaisseur (qui apparaît nécessaire pour conserver une performance d'isolation thermique proche de ce qui est obtenu avec des panneaux 3 de type PIV), de 10 cm, serait généralement considéré rédhibitoire du fait qu'on ne retrouve plus l'avantage de minceur lié aux panneaux PIV (qui sont pourtant plus couteux qu'un isolant classique comme du polyuréthanne). De plus, l'augmentation inhérente de la hauteur des parois planes 30 tend à réduire la bonne tenue mécanique de l'ossature rigide lorsque la distance d est seulement de l'ordre de 1 mm. Une valeur supérieure ou égale à 5 cm$^{-2}$, est donc bien plus avantageuse. Dans les formes de réalisation illustrées, on comprend que les épaisseurs d et E peuvent être par exemple d'environ 0,15 cm et 4 cm, respectivement, la valeur du critère qualitatif étant alors typiquement supérieure ou égale à 6 grâce à l'utilisation des panneaux 3 de type PIV (avec K2/K1 $\geq$ 3,5).

Afin de minimiser la distance entre deux panneaux 3 à l'intérieur de la couche d'isolation 12, il est avantageux de limiter la distance d qui correspond à l'épaisseur des parois planes 30. La matière constitutive de ces parois planes 30 est peu conductrice de la chaleur, avec par exemple une conductivité thermique préférée inférieure ou égale à 0,25 W m$^{-1}$ K$^{-1}$, et encore plus préférentiellement inférieure ou égale 0,1 W m$^{-1}$ K$^{-1}$.

Un des atouts de l'ensemble d'isolation thermique 1 est qu'il est utilisable dans diverses applications visant à améliorer l'efficacité énergétique des bâtiments :

- isolation thermique mince des parois légères ;
- isolation thermique mince par l'extérieur (murs, toitures en pente et toitures terrasses) ;
- panneaux sandwich préfabriqués ;

support ou couche sous-jacente de capteurs solaires thermiques.

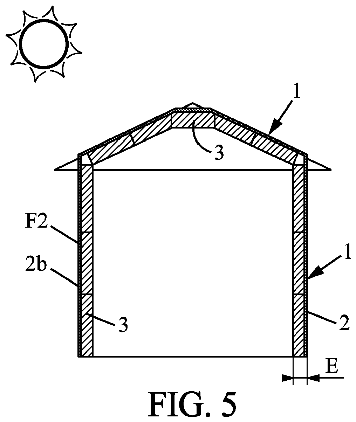

La figure 5 illustre, dans un bâtiment, des exemples de parois susceptibles d'être équipées par un ensemble d'isolation thermique 1 conforme à l'invention. On comprend que cet ensemble 1 permet de former ou de recouvrir par l'extérieur tout type de paroi d'un bâtiment soumise à un flux de chaleur résultant d'une montée de température extérieure.

Il doit être évident pour les personnes versées dans l'art que la présente invention permet des modes de réalisation sous de nombreuses autres formes spécifiques sans l'éloigner du domaine d'application de l'invention comme revendiqué.

## Revendications

1. Ensemble d'isolation thermique (1) destiné à former ou recouvrir, notamment par l'extérieur, une paroi d'un bâtiment, comprenant :

   - une pluralité de panneaux isolants (3) ayant chacun une forme de plaque avec deux tranches parallèles opposées, chacun des panneaux comprenant un matériau poreux (3a) résistant à la compression et une enveloppe barrière (3b) étanche aux gaz, fermée sous vide, qui renferme le matériau poreux, les panneaux (3) étant répartis en au moins une couche de panneaux qui définit une face externe (F2) ayant une surface déterminée ;
- une couche de protection thermique (2) comprenant au moins un matériau de stockage de chaleur latente réparti dans toute la couche de protection thermique ;

dans lequel la couche de protection thermique (2) présente une face interne (2a) directement en vis-à-vis de la couche de panneaux (3) et une face externe (2b), de sorte que la température de ladite face interne (2a) peut être inférieure à la température de la face externe (2b) de la couche de protection thermique (2) lorsque l'ensemble d'isolation thermique (1) est soumis à une montée en température du côté externe,
**caractérisé en ce qu'**il comporte des organes de positionnement (5', P1, P2 ; 5, 6) qui font partie d'une ossature rigide et permettant de répartir les panneaux isolants (3) ;
et **en ce que** la couche de protection thermique (2) recouvre ladite face externe (F2) de la couche de panneaux et présente une épaisseur (e2) inférieure ou égale à l'épaisseur (e1) de chacun des panneaux isolants (3) de ladite couche de panneaux, le recouvrement de ladite face externe de la couche de panneaux par la couche de protection thermique étant continu et/ou tel que la couche de protection thermique s'étend sur une surface au moins égale à ladite surface déterminée.

2. Ensemble d'isolation thermique selon la revendication 1, dans lequel les panneaux isolants (3) ont chacun quatre côtés dont deux côtés opposés parallèles séparés l'un de l'autre d'une distance inférieure à 2 ou 3 mm ou accolés l'un à l'autre dans la couche de panneaux isolants.

3. Ensemble d'isolation thermique selon la revendication 1 ou 2, dans lequel la couche de protection thermique (2) est souple, afin de pouvoir être déroulée et fixée sur la surface externe (F2) de la couche de panneaux isolants (3), de préférence par utilisation d'un matériau adhésif.

4. Ensemble d'isolation thermique selon la revendication 1 ou 2, dans lequel les organes de positionnement (5', P1, P2) sont pourvus chacun de deux cavités dont l'une dite première cavité (50) est remplie par un bord d'au moins un panneau des panneaux isolants (3) et l'autre dite deuxième cavité (51, 51') contient un bord latéral d'un élément au moins (20) de la couche de protection thermique (2), les deux cavités étant adjacentes.

5. Ensemble d'isolation thermique selon la revendication 1 ou 2, dans lequel la couche de protection thermique (2) comporte ou supporte les organes de positionnement (5, 6) pour bloquer en position au moins un panneau déterminé des panneaux isolants et délimiter avec ladite face interne un logement d'insertion (4a, 4b) pour recevoir un côté dudit panneau déterminé, ce grâce à quoi la couche de panneaux isolants (3) est accolée à la face interne (2a) de la couche de protection thermique (2).

6. Ensemble d'isolation thermique selon la revendication 4 ou 5, dans lequel les organes de positionnement (5, 6, 5', P1, P2) comprennent :

- un premier organe de positionnement (5, 5', P1) comprenant une base s'étendant longitudinalement selon une première direction ;
- un deuxième organe de positionnement (6, P2) comprenant une base s'étendant longitudinalement selon une deuxième direction ;

dans lequel au moins un des panneaux isolants est engagé contre la base du premier organe de positionnement (5, 5') et contre la base du deuxième organe de positionnement (6) ;
et dans lequel la première direction est perpendiculaire à la deuxième direction, chacune de la première direction et de la deuxième direction étant parallèle à la couche de panneaux (3).

7. Ensemble d'isolation thermique selon l'une quelconque des revendications 4 à 6, dans lequel les organes de positionnement (5, 6, 5', P1, P2) comprennent une portion plane (30) qui s'insère dans la couche de panneaux (3) et présente une conductivité thermique inférieure ou égale à 0,6 W m$^{-1}$ K$^{-1}$ et de préférence inférieure à 0,25 W m$^{-1}$ K$^{-1}$.

8. Ensemble d'isolation thermique selon la revendication 7, dans lequel ladite portion plane (30) qui s'insère dans la couche de panneaux (3) présente une épaisseur au moins deux fois plus mince que l'épaisseur (e2) de la couche de protection thermique (2), l'épaisseur de la portion plane (30) étant de préférence inférieure ou égale à 3 mm.

9. Ensemble d'isolation thermique selon l'une quelconque des revendications 1 à 8, dans lequel les panneaux isolants (3) sont agencées dans au moins une rangée (R) et une zone de jonction est définie entre deux panneaux isolants (3) adjacents dans une rangée, la couche de protection thermique (2) comportant au moins deux éléments adjacents (20) séparés par un élément mince (B) seulement dans des zones décalées par rapport à ladite zone de jonction pour ne pas coïncider avec une arête des panneaux isolants (3).

10. Ensemble d'isolation thermique selon la revendication 5 seule ou combinée à l'une quelconque des revendications 6 à 8, dans lequel les organes de positionnement (5, 6) comprennent des éléments de retenue en saillie depuis une surface plane de ladite face interne (2a), chacun des éléments de retenue comportant ladite portion plane (30) et une languette (36) raccordée à une extrémité de la portion plane (30), les languettes (36) permettant un maintien d'une position accolée entre la face interne (2a) de la couche de protection thermique (2) et les panneaux isolants (3) de la couche de panneaux.

11. Ensemble d'isolation thermique selon la revendication 10, dans lequel la couche de protection thermique (2) est rigide pour former une protection mécanique et comporte les organes de positionnement (5, 6), les organes de positionnement comprenant au moins un orifice transversal pour permettre le passage d'un insert de fixation ou étant pourvus d'inserts de fixation (8).

12. Ensemble d'isolation thermique selon l'une quelconque des revendications 1 à 11, dans lequel la distance entre la face externe (F2) de la couche de panneaux isolants (3) et la face externe (2a) de la couche de protection thermique (2) est inférieure à 20 mm, et de préférence inférieure à 10 mm.

13. Ensemble d'isolation thermique selon l'une quelconque des revendications 1 à 12, comprenant un parement externe et dans lequel la couche de protection thermique (2) comprend des organes de montage (2c) configurés pour que le parement externe soit monté amovible par rapport à la couche de protection thermique.

14. Ensemble d'isolation thermique selon l'une quelconque des revendications 1 à 13, dans lequel le matériau de stockage de chaleur latente est un matériau à changement de phase dont la température de fusion est comprise entre 25°C et 45°C, de préférence comprise entre 30°C et 40°C, ledit matériau à changement de phase ayant une chaleur latente de fusion comprise entre 100 kJ/kg et 300 kJ/kg, de préférence entre 220 et 260 kJ/kg.

15. Ensemble d'isolation thermique selon l'une quelconque des revendications 1 à 14, dans lequel la couche de protection thermique (2) est isolante à l'humidité.

16. Procédé d'assemblage d'un ensemble d'isolation thermique (1) tel que défini dans l'une quelconque des revendications précédentes, in situ dans un bâtiment, en utilisant une couche de protection thermique (2) comprenant au moins un matériau de stockage de chaleur latente et qui est de préférence isolante à l'humidité, le procédé comprenant les étapes consistant essentiellement à :

- rendre solidaire de ladite couche de protection thermique (2), par utilisation d'organes de positionnement (5', P1, P2 ; 5, 6) qui font partie d'une ossature rigide, une pluralité de panneaux isolants (3) ayant chacun une forme de plaque avec deux tranches parallèles opposées et une même épaisseur (e1), chacun des panneaux (3) comprenant un matériau poreux (3a) résistant à la compression et une enveloppe barrière (3b) étanche aux gaz, fermée sous vide, qui renferme le matériau poreux (3a), de façon à répartir les panneaux (3) en au moins une couche de panneaux, sachant que la couche de protection thermique (2) présente une épaisseur (e2) inférieure ou égale à l'épaisseur (e1) de chacun des panneaux isolants (3) ;
- lors de la fixation des panneaux isolants (3), accoler chacun des panneaux isolants contre une même face interne (2a) de la couche de protection thermique (2), de sorte que la couche de protection thermique recouvre continûment une face dite externe (F2) de la couche de panneaux isolants (3) ;
- placer la couche de protection thermique (2) du côté extérieur du bâtiment et la couche de panneaux isolants (3) du côté intérieur, de sorte que la température de ladite face interne (2a) peut être inférieure à la température d'une face externe (2b) de la couche de protection thermique (2) lorsque l'ensemble d'isolation thermique (1) est soumis à une montée en température du côté externe.

**Patentansprüche**

1. Wärmedämmungsanordnung (1), welche dazu bestimmt ist, eine Wand eines Gebäudes zu bilden oder, insbesondere von außen, zu bedecken, umfassend:

- mehrere Dämmplatten (3), die jeweils eine Plattenform mit zwei einander gegenüberliegenden parallelen Schmalseiten aufweisen, wobei jede der Platten ein druckfestes poröses Material (3a) und eine unter Vakuum verschlossene, gasdichte Barrierehülle (3b), welche des poröse Material umschließt, umfasst, wobei die Platten (3) in wenigstens einer Schicht von Platten verteilt sind, welche eine Außenseite (F2) definiert, die eine bestimmte Fläche aufweist;

- eine thermische Schutzschicht (2), die wenigstens ein Material zur Speicherung latenter Wärme umfasst, das in der gesamten thermischen Schutzschicht verteilt ist;

wobei die thermische Schutzschicht (2) eine Innenseite (2a) direkt gegenüber der Schicht von Platten (3) und eine Außenseite (2b) aufweist, derart, dass die Temperatur der Innenseite (2a) niedriger als die Temperatur der Außenseite (2b) der thermischen Schutzschicht (2) sein kann, wenn die Wärmedämmungsanordnung (1) einem Temperaturanstieg auf der Außenseite ausgesetzt ist, **dadurch gekennzeichnet, dass** sie Positionierungsorgane (5', P1, P2; 5, 6) aufweist, welche Teil eines starren Gerüstes sind und ermöglicht, die Dämmplatten (3) zu verteilen;

und dadurch, dass die thermische Schutzschicht (2) die Außenseite (F2) der Schicht von Platten bedeckt und eine Dicke (e2) aufweist, die kleiner oder gleich der Dicke (e1) jeder der Dämmplatten (3) der Schicht von Platten ist, wobei die Bedeckung der Außenseite der Schicht von Platten durch die thermische Schutzschicht durchgehend und/oder so beschaffen ist, dass sich die thermische Schutzschicht auf einer Fläche erstreckt, die wenigstens gleich der bestimmten Fläche ist.

2. Wärmedämmungsanordnung nach Anspruch 1, wobei die Dämmplatten (3) jeweils vier Seiten aufweisen, von denen zwei parallele, einander gegenüberliegende Seiten durch ersten Abstand voneinander getrennt sind, der kleiner als 2 oder 3 mm ist, oder aneinander angefügt sind in der Schicht von Dämmplatten.

3. Wärmedämmungsanordnung nach Anspruch 1 oder 2, wobei die thermische Schutzschicht (2) flexibel ist, um abgewickelt und auf der Außenfläche (F2) der Schicht von Dämmplatten (3) befestigt werden zu können, vorzugsweise durch Verwendung eines Klebstoffs.

4. Wärmedämmungsanordnung nach Anspruch 1 oder 2, wobei die Positionierungsorgane (5', P1, P2) jeweils mit zwei Hohlräumen versehen sind, von denen der eine, erster Hohlraum (50) genannt, von einem Rand wenigstens einer Platte der Dämmplatten (3) ausgefüllt wird und der andere, zweiter Hohlraum (51, 51') genannt, einen seitlichen Rand wenigstens eines Elements (20) der thermischen Schutzschicht (2) enthält, wobei die zwei Hohlräume benachbart sind.

5. Wärmedämmungsanordnung nach Anspruch 1 oder 2, wobei die thermische Schutzschicht (2) die Positionierungsorgane (5, 6) aufweist oder stützt, um wenigstens eine bestimmte Platte der Dämmplatten in ihrer Position zu blockieren und mit der Innenseite einen Einfügeraum (4a, 4b) zu begrenzen, um eine Seite der bestimmten Platte aufzunehmen, wodurch die Schicht von Dämmplatten (3) an die Innenseite (2a) der thermischen Schutzschicht (2) angefügt wird.

6. Wärmedämmungsanordnung nach Anspruch 4 oder 5, wobei die Positionierungsorgane (5, 6, 5', P1, P2) umfassen:

- ein erstes Positionierungsorgan (5, 5', P1), welches ein Unterteil umfasst, das sich in einer ersten Richtung längs erstreckt;
- ein zweites Positionierungsorgan (6, P2), welches ein Unterteil umfasst, das sich in einer zweiten Richtung längs erstreckt;

wobei wenigstens eine der Dämmplatten am Unterteil des ersten Positionierungsorgans (5, 5') und am Unterteil des zweiten Positionierungsorgans (6) angreift; und wobei die erste Richtung senkrecht zur zweiten Richtung ist, wobei die erste Richtung und die zweite Richtung jeweils parallel zur Schicht von Platten (3) sind.

7. Wärmedämmungsanordnung nach einem der Ansprüche 4 bis 6, wobei die Positionierungsorgane (5, 6, 5', P1, P2) einen ebenen Abschnitt (30) umfassen, welcher sich in die Schicht von Platten (3) einfügt und eine spezifische Wärmeleitfähigkeit aufweist, die kleiner oder gleich 0,6 W m$^{-1}$ K$^{-1}$ und vorzugsweise kleiner als 0,25 W m$^{-1}$ K$^{-1}$ ist.

8. Wärmedämmungsanordnung nach Anspruch 7, wobei der ebene Abschnitt (30), welcher sich in die Schicht von Platten (3) einfügt, eine Dicke aufweist, die höchstens halb so groß wie die Dicke (e2) der thermischen Schutzschicht (2) ist, wobei die Dicke des ebenen Abschnitts (30) vorzugsweise kleiner oder gleich 3 mm ist.

9. Wärmedämmungsanordnung nach einem der Ansprüche 1 bis 8, wobei die Dämmplatten (3) in wenigstens einer Reihe (R) angeordnet sind und ein Verbindungsbereich zwischen zwei benachbarten Dämmplatten (3) in einer Reihe definiert ist, wobei die thermische Schutzschicht (2) wenigstens zwei benachbarte Elemente (20) aufweist, die nur durch ein dünnes Element (B) in Bereichen getrennt sind, die in Bezug auf den Verbindungsbereich versetzt sind, um nicht mit einer Kante der Dämmplatten (3) zusammenzufallen.

10. Wärmedämmungsanordnung nach Anspruch 5 allein oder in Kombination mit einem der Ansprüche 6 bis 8, wobei die Positionierungsorgane (5, 6) Halteelemente umfassen, die von einer ebenen Fläche der Innenseite (2a) aus vorstehen, wobei jedes der Halteelemente den ebenen Abschnitt (30) und eine Zunge (36), die an ein Ende des ebenen Abschnitts (30) angeschlossen ist, aufweist, wobei die Zungen (36) ein Beibehalten einer aneinandergefügten Position zwischen der Innenseite (2a) der thermischen Schutzschicht (2) und der Dämmplatten (3) der Schicht von Platten ermöglichen.

11. Wärmedämmungsanordnung nach Anspruch 10, wobei die thermische Schutzschicht (2) starr ist, um einen mechanischen Schutz zu bilden, und die Positionierungsorgane (5, 6) aufweist, wobei die Positionierungsorgane wenigstens eine quer verlaufende Öffnung umfassen, um den Durchgang eines Befestigungseinsatzes zu ermöglichen, oder mit Befestigungseinsätzen (8) versehen sind.

12. Wärmedämmungsanordnung nach einem der Ansprüche 1 bis 11, wobei der Abstand zwischen der Außenseite (F2) der Schicht von Dämmplatten (3) und der Außenseite (2a) der thermischen Schutzschicht (2) kleiner als 20 mm und vorzugsweise kleiner als 10 mm ist.

13. Wärmedämmungsanordnung nach einem der Ansprüche 1 bis 12, welche eine Außenverkleidung umfasst, und wobei die thermische Schutzschicht (2) Montageorgane (2c) umfasst, die so gestaltet sind, dass die Außenverkleidung lösbar in Bezug auf die thermische Schutzschicht angebracht ist.

14. Wärmedämmungsanordnung nach einem der Ansprüche 1 bis 13, wobei das Material zur Speicherung latenter Wärme ein Phasenwechselmaterial ist, dessen Schmelztemperatur zwischen 25 °C und 45 °C, vorzugsweise zwischen 30 °C und 40 °C liegt, wobei das Phasenwechselmaterial eine latente Schmelzwärme zwischen 100 kJ/kg und 300 kJ/kg, vorzugsweise zwischen 220 und 260 kJ/kg aufweist.

15. Wärmedämmungsanordnung nach einem der Ansprüche 1 bis 14, wobei thermische Schutzschicht (2) feuchtigkeitsisolierend ist.

16. Verfahren zur Montage einer Wärmedämmungsanordnung (1), wie in einem der vorhergehenden Ansprüche definiert, vor Ort in einem Gebäude, unter Verwendung einer thermischen Schutzschicht (2), die wenigstens ein Material zur Speicherung latenter Wärme umfasst und die vorzugsweise feuchtigkeitsisolierend ist, wobei das Verfahren die Schritte umfasst, die im Wesentlichen in Folgendem bestehen:

    - festes Verbinden der thermischen Schutzschicht (2) unter Verwendung von Positionierungsorganen (5', P1, P2; 5, 6), welche Teil eines starren Gerüstes sind, mehrerer Dämmplatten (3), die jeweils eine Plattenform mit zwei einander gegenüberliegenden parallelen Schmalseiten und ein und dieselbe Dicke (e1) aufweisen, wobei jede der Platten (3) ein druckfestes poröses Material (3a) und eine unter Vakuum verschlossene, gasdichte Barrierehülle (3b), welche des poröse Material (3a) umschließt, umfasst, so dass die Platten (3) in wenigstens einer Schicht von Platten verteilt werden, unter Berücksichtigung dessen, dass die thermische Schutzschicht (2) eine Dicke (e2) aufweist, die kleiner oder gleich der Dicke (e1) jeder der Dämmplatten (3) ist;
    - bei der Befestigung der Dämmplatten (3), Anfügen jeder der Dämmplatten an ein und dieselbe Innenseite (2a) der thermischen Schutzschicht (2), derart, dass die thermische Schutzschicht eine sogenannte Außenseite (F2) der Schicht von Dämmplatten (3) durchgehend bedeckt;
    - Anordnen der thermischen Schutzschicht (2) auf der Außenseite des Gebäudes und der Schicht von Dämmplatten (3) auf der Innenseite, derart, dass die Temperatur der Innenseite (2a) niedriger als die Temperatur einer Außenseite (2b) der thermischen Schutzschicht (2) sein kann, wenn die Wärmedämmungsanordnung (1) einem Temperaturanstieg auf der Außenseite ausgesetzt ist.

**Claims**

1. A thermal insulation assembly (1) intended to form or cover, in particular from the outside, a wall of a building, comprising:

   - a plurality of insulating panels (3) each having a plate shape with two opposite parallel slices, each of the panels comprising a porous material (3a) resistant to compression and a gas-tight barrier envelope (3b), closed under vacuum, which encloses the porous material, the panels (3) being distributed in at least one layer of panels which defines an outer face (F2) having a determined surface;
   - a thermal protection layer (2) comprising at least one latent heat storage material distributed throughout the thermal protection layer;
   wherein the thermal protection layer (2) has an inner face (2a) directly opposite to the layer of panels (3) and an outer face (2b), so that the temperature of said inner face (2a) can be lower than the temperature of the outer face (2b) of the thermal protection layer (2) when the thermal insulation assembly (1) is subjected to a rise in temperature on the outer side,
   **characterised in that** it includes positioning members (5', P1, P2; 5, 6) which are part of a rigid frame and allowing to distribute the insulating panels (3);
   and **in that** the thermal protection layer (2) covers said outer face (F2) of the layer of the panels and has a thickness (e2) less than or equal to the thickness (e1) of each of the insulating panels (3) of said layer of panels, the covering of said outer face of the layer of panels with the thermal protection layer being continuous and/or such that the thermal protection layer extends over a surface at least equal to said determined surface.

2. The thermal insulation assembly according to claim 1, wherein the insulating panels (3) each have four sides including two opposite parallel sides separated from each other by a distance of less than 2 or 3 mm or joined together in the layer of insulating panels.

3. The thermal insulation assembly according to claim 1 or 2, wherein the thermal protection layer (2) is flexible, so that it can be unrolled and fixed to the outer surface (F2) of the layer of insulating panels (3), preferably by using an adhesive material.

4. The thermal insulation assembly according to claim 1 or 2, wherein the positioning members (5', P1, P2) are each provided with two cavities, one of which is called first cavity (50) and is filled by an edge of at least one panel of the insulating panels (3) and the other called second cavity (51, 51') contains a lateral edge of at least one element (20) of the thermal protection layer (2), the two cavities being adjacent.

5. The thermal insulation assembly according to claim 1 or 2, wherein the thermal protection layer (2) includes or supports the positioning members (5, 6) to block in position at least one determined panel of the insulating panels and delimit with said inner face an insertion housing (4a, 4b) for receiving a side of said determined panel, whereby the layer of insulating panels (3) is joined to the inner face (2a) of the thermal protection layer (2).

6. The thermal insulation assembly according to claim 4 or 5, wherein the positioning members (5, 6, 5', P1, P2) comprise:

   - a first positioning member (5, 5', P1) comprising a base extending longitudinally along a first direction;
   - a second positioning member (6, P2) comprising a base extending longitudinally along a second direction;
   wherein at least one of the insulating panels is engaged against the base of the first positioning member (5, 5') and against the base of the second positioning member (6);
   and wherein the first direction is perpendicular to the second direction, each of the first direction and the second direction being parallel to the layer of panels (3).

7. The thermal insulation assembly according to any one of claims 4 to 6, wherein the positioning members (5, 6, 5', P1, P2) comprise a flat portion (30) which is inserted into the layer of panels (3) and has a thermal conductivity less than or equal to 0.6 W m$^{-1}$ K$^1$ and preferably less than 0.25 W m$^{-1}$ K$^1$.

8. The thermal insulation assembly according to claim 7, wherein said flat portion (30) which is inserted into the layer of panels (3) has a thickness at least twice as thin as the thickness (e2) of the thermal protection layer (2), the thickness of the flat portion (30) preferably being less than or equal to 3 mm.

9. The thermal insulation assembly according to any one of claims 1 to 8, wherein the insulating panels (3) are arranged in at least one row (R) and a junction area is defined between two adjacent insulating panels (3) in a row, the thermal protection layer (2) including at least two adjacent elements (20) separated by a thin element (B) only in areas shifted relative to said junction area so as not to coincide with a ridge of the insulating panels (3).

10. The thermal insulation assembly according to claim 5 alone or combined with any one of claims 6 to 8, wherein the positioning members (5, 6) comprise retaining elements protruding from a flat surface of said inner face (2a), each of the retaining elements including said flat portion (30) and a tab (36) connected to one end of the flat portion (30), the tabs (36) allowing to maintain a joined position between the inner face (2a) of the thermal protection layer (2) and the insulating panels (3) of the layer of panels.

11. The thermal insulation assembly according to claim 10, wherein the thermal protection layer (2) is rigid to form a mechanical protection and includes the positioning members (5, 6), the positioning members comprising at least one transverse orifice to allow the passage of a fixing insert or being provided with fixing inserts (8).

12. The thermal insulation assembly according to any one of claims 1 to 11, wherein the distance between the outer face (F2) of the layer of insulating panels (3) and the outer face (2a) of the thermal protection layer (2) is less than 20 mm, and preferably less than 10 mm.

13. The thermal insulation assembly according to any one of claims 1 to 12, comprising an outer facing and wherein the thermal protection layer (2) comprises mounting members (2c) configured so that the outer facing is removably mounted relative to the thermal protection layer.

14. The thermal insulation assembly according to any one of claims 1 to 13, wherein the latent heat storage material is a phase change material whose fusion temperature is comprised between 25°C and 45°C, preferably comprised between 30°C and 40°C, said phase change material having a latent heat of fusion comprised between 100 kJ/kg and 300 kJ/kg, preferably between 220 and 260 kJ/kg.

15. The thermal insulation assembly according to any one of claims 1 to 14, wherein the thermal protection layer (2) is moisture insulating.

16. A method for assembling a thermal insulation assembly (1) as defined in any one of the preceding claims, in situ in a building, using a thermal protection layer (2) comprising at least one latent heat storage material and which is preferably moisture insulating, the method comprising the steps consisting essentially in:

- making a plurality of insulating panels (3) each having a plate shape with two opposite parallel slices and the same thickness (e1) integral with said thermal protection layer (2), by using positioning members (5', P1, P2; 5, 6) which are part of a rigid frame, each of the panels (3) comprising a porous material (3a) resistant to compression and a gas-tight barrier envelope (3b), closed under vacuum, which encloses the porous material (3a), so as to distribute the panels (3) into at least one layer of panels, knowing that the thermal protection layer (2) has a thickness (e2) less than or equal to the thickness (e1) of each of the insulating panels (3);
- when fixing the insulating panels (3), joining each of the insulating panels against the same inner face (2a) of the thermal protection layer (2), so that the thermal protection layer continuously covers a face called outer face (F2) of the layer of insulating panels (3);
- placing the thermal protection layer (2) on the outer side of the building and the layer of insulating panels (3) on the inner side, so that the temperature of said inner face (2a) can be lower than the temperature of an outer face (2b) of the thermal protection layer (2) when the thermal insulation assembly (1) is subjected to a rise in temperature on the outside.

FIG. 1A

FIG. 1B

FIG. 2

FIG. 3A

FIG. 3B

FIG. 3C

FIG. 3D

FIG. 4A

FIG. 4B

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2009299764 B
- EP 2540925 A

- DE 102008019717